# EUROPEAN PATENT SPECIFICATION

(11) **EP 2 236 027 B1**
(45) Date of publication and mention of the grant of the patent: **30.05.2012**
(21) Application number: 10250562.5
(22) Date of filing: 24.03.2010
(51) Int. Cl.: A01K 89/01

(54) **A fixed spool fishing reel**
Angelrolle mit fester Spule
Moulinet de pêche à bobine fixe

(30) Priority: 03.04.2009 GB 0905867
(43) Date of publication of application: 06.10.2010
(73) Proprietor: Fox International Group Limited, Hainault, Essex IG6 3UT (GB)
(72) Inventor: Little, Mark, Billericay, Essex CM12 9QY (GB)
(74) Representative: Crouch, David John

(56) References cited:
- US-A- 3 670 984
- US-A- 6 149 087

## Description

The present invention relates to a fixed spool fishing reel having a handle coupled to a bail arm drive of the reel so that a turning of the handle causes rotation of the bail arm, and a freely rotatable line guide roller on the bail arm around which fishing line extends when the reel is in use, so that as the bail arm rotates around the spool such line is drawn in away from the water being fished, around the roller and onto the spool.

Rotation of the roller during this process reduces friction on the line whilst it is being transferred from the bail arm to the spool.

Surprisingly rotation of the roller for some types of fishing line causes the latter to twist. Whilst this may not have any adverse effect whilst the line is being laid onto the spool, it may cause problems when the next cast is made, when the line spills off the forward end of the spool as it unwinds therefrom. The twist may then cause the line to tangle. The document US 3670 984 A discloses a fixed speed fishing reel according to the preamble of independent claim one.

The present invention seeks to provide a remedy.

Accordingly the present invention is directed to a fixed spool fishing reel having the construction set out in the opening paragraph of the present specification, in which the bail arm is provided with a readily releasable lock arranged to inhibit rotation of the line guide roller.

Preferably the lock comprises a movable spigot, and the line guide roller is provided with a skirt portion in which is formed at least one hole or recess releasably engageable by the spigot.

The spigot may be held in a sleeve in which extends a spring which urges the spigot towards engagement with the said at least one hole or recess. As a result, if the lock is operated to move the spigot into engagement with the said at least one hole or recess at a time when the latter is not in registration with the spigot, the latter is urged by the spring against the skirt until there is such registration, whereupon the spring pushes the spigot into such engagement.

The sleeve may comprise a stepped internal side wall and the spigot may be provided with a shoulder, and the spigot may project from one end of the sleeve with the spring being a compression spring extending into the other end of the sleeve so as to urge the shoulder against the step. That way the spigot may be pushed into the sleeve against the action of the spring, but the spring is unable to push the spigot out of the sleeve beyond the point where the shoulder engages the step.

The sleeve may be slidable towards and away from the skirt, so that operation of the lock is effected by movement of the sleeve towards the skirt. This causes the spigot to engage the said at least one hole or recess when the latter is in registration with the spigot, and thus to lock the roller against further rotation. The lock may be readily released by moving the sleeve away from the skirt, so that the roller is once more free to rotate.

At least one protuberance may be provided on the sleeve and at least one recess may be provided on the bail arm to enable the protuberance to snap fit into the recess to hold the sleeve releasably in the locking position.

An example of a fixed spool fishing reel embodying the present invention will now be described with reference to the accompanying drawings, in which:
- Figure 1: shows a perspective view from the front and to one side of a fixed spool fishing reel embodying the present invention;
- Figure 2: shows a side perspective view of a part of the fishing reel shown in Figure 1, on a larger scale;
- Figure 3: shows an exploded view of the part shown in Figure 2, rotated slightly clockwise about its axis; and
- Figure 3a: shows an axial sectional view of a portion of the part shown in Figure 3.

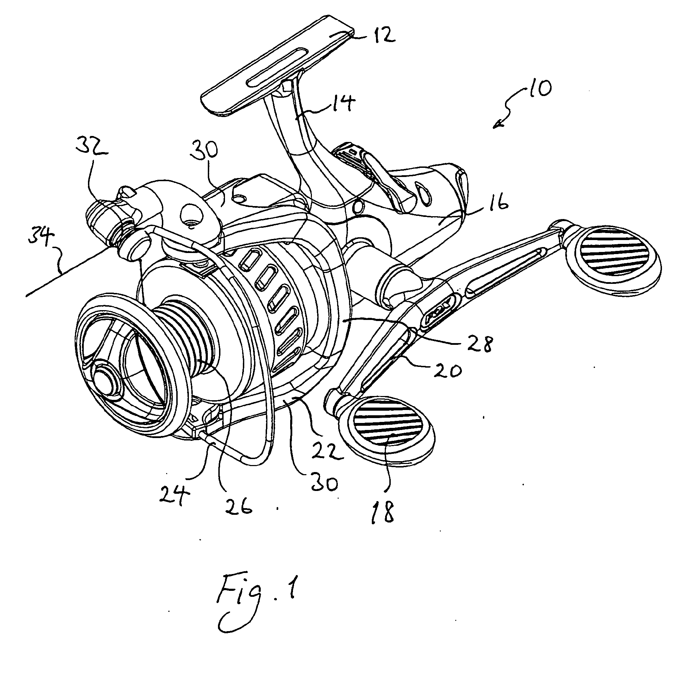

A fixed spool fishing reel 10 shown in Figure 1 comprises a mounting foot 12, a support arm 14 extending from the mounting foot 12 to the reel housing 16, a handle 18 rotatably mounted on a crank 20 connected to the housing 16, a bail arm 22 with a bail 24, and a skirted spool 26 adjacent to the front of the housing 16 with its axis parallel to the foot 12 and hence to an angling rod to which the reel is attached when the latter is in use. An internal coupling (not shown) within the housing 16 links the crank 20 to the bail arm 22 so that anticlockwise movement of the crank 20 as viewed in Figure 1 causes a clockwise movement of the bail arm 22 as viewed in Figure 1, and simultaneously longitudinal reciprocation of the spool 26.

The bail arm 22 is 'U' shaped with the base 28 of the 'U' adjacent to the front end of the housing 16 and located between the housing 16 and the spool 26. Two portions 30 of the bail arm 22 extend forwardly from the base 28 on opposite sides of the spool 26.

The bail 24 is arcuate and extends from the free end of one of the portions 30 to the free end of the other. The bail 24 is pivotable about an axis which passes through those free ends from the position it has shown in Figure 1 ("the first position"), forwardly to a position ("the second position") in which it lies in a plane generally at 90° to the first position. With the bail arm in the second position, a rigging (not shown) attached to the front end of a fishing line 34 is cast into the water to be fished. During casting the line spills off the front of the spool 26 as it progressively unwinds therefrom. Between one end of the bail 24 and the free end of one of the portions 30 of the bail arm 22, is located a line guide roller 32 having an axis of rotation which is substantially or generally orthogonal to the axis of the spool 26. The roller 32 is provided with a line guide groove around its circumference.

Upon playing a fish caught by the rigging, with a turn of the handle 18 in an anticlockwise direction viewing the reel as in Figure 1, a mechanism (not shown) within the housing 16 moves the bail 24 into the first position such that the fishing line 34 extends from the water being fished around the roller 32 and on to the spool 26. Further operation of the handle 18 causes the line to be laid evenly on the spool 26 by virtue of the simultaneous rotation of the bail arm 22 and longitudinal reciprocating motion of the spool 26, the line being drawn in from the water during this process passing over the roller and on to the spool, rotation of the roller assisting this process.

The roller 32 can be locked against rotation in the event that the characteristics of the fishing line 34 are such that rotation of the roller 32 may cause the line to twist.

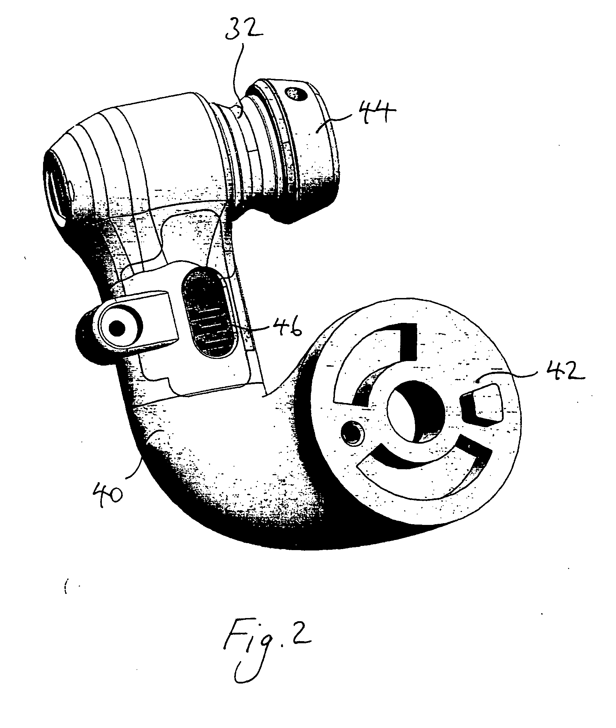

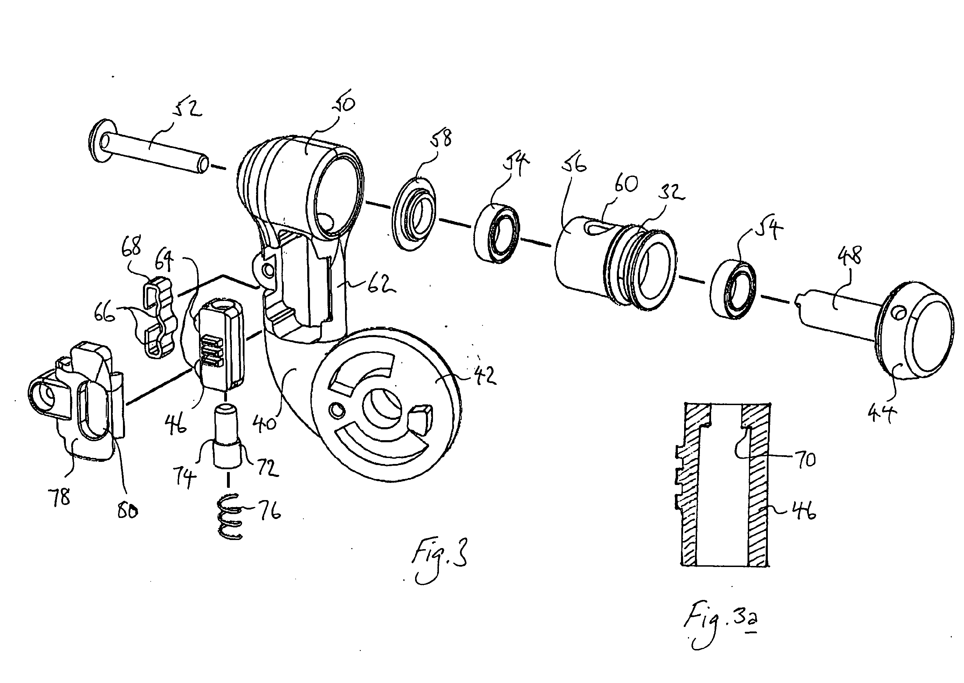

The mechanism by which such releasable locking can be effected is shown in Figures 2 and 3. Figure 2 shows an auxiliary arm 40 which has one end 42 attached to a free end of one of the portions 30 of the bail arm 22 shown in Figure 1. The end 42 is provided with formations which facilitate it being mounted on that portion 30.

The other end of the arm 40 is provided with an anchor 44 to which one end of the bail 24 is attached and is also provided with the roller 32 and a switch member 46 which in the position it has shown in Figure 2 allows free rotation of the roller 32. However, it may be slid from that position upwardly with reference to that Figure to a position in which the roller 32 is releasably locked against rotation. Sliding the switch member 46 back into position, as shown in Figure 2, once again releases the roller 32 from being locked so that it is once again free to rotate about its axis of rotation.

Figure 3 shows the part shown in Figure 2, as well as further component parts. More especially, the bail mount 44 is provided with an axle 48 which extends through a generally cylindrical housing portion 50 of the auxiliary arm 40 and is secured therein by means of a screw 52 inserted through the rear end of the housing portion 50, as viewed in Figure 3. Two bearings 54 surround the axle 48 and are held within the roller 32 and a skirt 56 extending rearwardly therefrom. The bearing 54 is seated on a rear locator 58 held at one end of the interior of the housing portion 50. The skirt 56 is provided with at least one aperture or recess 60.

The switch member 46 is received in a further housing portion 62 of the auxiliary arm 40 which extends generally transversely of the axis of the cylindrical housing portion 50. The switch member 46 is free to slide longitudinally within the housing portion 62 towards and away from the skirt 56. It has rearwardly projecting protuberances 64 which snap into recesses 66 formed in a generally rectangularly shaped leaf spring 68 so that it snaps into either selected one of the first position and the second position. The switch portion 46 is hollow, having a throughbore extending through it longitudinally. The throughbore is provided with a step 70 at a generally central position along the length of the switch member 46 so that it has a smaller cross-section at its upper end than it does at its lower end, as shown in Figure 3a.

A spigot 72 extends within the hollow of the switch member 46. The spigot 72 is provided with a shoulder portion 74. A helical compression spring 76 is located to urge the spigot 72 in an upward direction, as viewed in Figure 3 so that its shoulder 74 is urged against the step 70. A further portion 78 of the housing portion 62 holds the parts 46, 68, 72 and 76 within the housing portion 62 whilst at the same time being provided with an aperture 80 to provide access to the switch member 46.

When in use, the switch member 46 may be slid upwardly, as viewed in Figure 3. If the hole or recess 60 is in registration with the spigot 72 at this time, it will engage that recess to prevent the skirt 56 and hence the roller 32 from further rotation. If on the other hand at the time the switch member 46 is slid upwardly, the hole or aperture 60 is not in registration with the spigot 72, the spring 76 will urge the spigot 72 against the skirt 56 until the hole or aperture is next in registration with the spigot 72, whereupon the latter will engage the former. This releasably locks the roller 32 against rotation.

When the switch member 46 is moved downwardly as in Figure 3 away from the skirt 56, the step 70 abuts the shoulder 74 to move the spigot 72 against the action of the compression spring 76 out of engagement with the hole or recess 60. The roller 32 is now once more free to rotate.

Numerous variations or modifications to the illustrated reel may occur to the reader without taking the resulting construction outside the scope of the present invention. To give one example only, the switch member 46 might be blind at its end further from the skirt 56 with the compression spring 76 located wholly within the switch member 46 between the blind end thereof and the spigot 72.

At least one protuberance may be provided on the sleeve and at least one recess may be provided on the bail arm to enable the protuberance to snap fit into the recess to hold the sleeve releasably in the locking position.

## Claims

1. A fixed spool fishing reel (10) having a handle (18) coupled to a bail arm drive of the reel (10) so that a turning of the handle (18) causes rotation of the bail arm (40), and a freely rotatable line guide roller (32) on the bail arm (40) around which fishing line (34) extends when the reel (10) is in use, so that as the bail arm (40) rotates around the spool (26) such line (34) is drawn in away from the water being fished, around the roller (32) and onto the spool (26), **characterised in that** the bail arm (40) is provided with a readily releasable lock (46, 60, 72, 74, 76) arranged to inhibit rotation of the line guide roller (32).

2. A fixed spool fishing reel according to claim 1, **characterised in that** the lock (46, 60, 72, 74, 76) comprises a movable spigot (72), and the line guide roller (32) is provided with a skirt portion (56) in which is formed at least one hole or recess (60) releasably engageable by the spigot (72).

3. A fixed spool fishing reel according to claim 2, **characterised in that** the spigot (72) is held in a sleeve (46) in which extends a spring (76) which urges the spigot (72) towards engagement with the said at least one hole or recess (60).

4. A fixed spool fishing reel according to claim 3, **characterised in that** the sleeve (46) comprises a stepped internal side wall and the spigot (72) is provided with a shoulder (74), and the spigot (72) projects from one end of the sleeve (46) with the spring (76) being a compression spring extending into the other end of the sleeve (46) so as to urge the shoulder (74) against the step.

5. A fixed spool fishing reel according to claim 3 or claim 4, **characterised in that** the sleeve (46) is slidable towards and away from the skirt (56), so that operation of the lock (46, 60, 72, 74, 76) is effected by movement of the sleeve (46) towards the skirt (56).

6. A fixed spool fishing reel according to any one of claims 3 to 5, **characterised in that** at least one protuberance (64) is provided on the sleeve (46) and at least one recess (66) is provided on the bail arm (40) to enable the protuberance (64) to snap fit into the recess (66) to hold the sleeve (46) releasably in the locking position.

## Patentansprüche

1. Angelrolle (10) mit fester Spule, die eine Handhabe (18) besitzt, welche mit einem Bügelarmantrieb der Angelrolle (10) gekoppelt ist, sodass ein Drehen der Handhabe (18) eine Rotation des Bügelarmes (40) bewirkt, und die eine frei drehbare Schnurführungsrolle (32) an dem Bügelarm (40) besitzt, um welche sich die Angelschnur (34) erstreckt, wenn die Angelrolle (10) in Betrieb ist, sodass dann, wenn der Bügelarm (40) sich um die Spule (26) dreht, eine solche Angelschnur (34) von dem Wasser weg, in welchem gefischt wird, um die Führungsrolle (32) herum und auf die Spule (26) eingezogen wird,
**dadurch gekennzeichnet,**
**dass** der Bügelarm (40) mit einer ohne weiteres lösbaren Verriegelung (46, 60, 72, 74, 76) versehen ist, die derart angeordnet ist, dass sie die Rotation der Schnurführungsrolle (32) blockiert.

2. Angelrolle mit fester Spule nach Anspruch 1,
**dadurch gekennzeichnet,**
**dass** die Verriegelung (46, 60, 72, 74, 76) einen bewegbaren Zapfen (72) aufweist,
und **dass** die Schnurführungsrolle (32) mit einem Einfassungsteil (56) versehen ist, in welchem mindestens ein Loch oder eine Aussparung (60) ausgebildet ist, mit dem oder der der Zapfen (72) in lösbaren Eingriff bringbar ist.

3. Angelrolle mit fester Spule nach Anspruch 2,
**dadurch gekennzeichnet,**
**dass** der Zapfen (72) in einer Buchse (46) gehalten ist, in der sich eine Feder (76) erstreckt, welche den Zapfen in Eingriff mit dem mindestens einen Loch oder der mindestens einen Aussparung (60) vorspannt.

4. Angelrolle mit fester Spule nach Anspruch 3,
**dadurch gekennzeichnet,**
**dass** die Buchse (46) eine mit Stufe versehene innere Seitenwand aufweist und dass der Zapfen (72) mit einer Schulter (74) versehen ist, wobei der Zapfen (72) von dem einen Ende der Buchse (46) vorsteht, wobei die Feder (76) eine Druckfeder ist, die sich in das andere Ende der Buchse (46) erstreckt, um die Schulter (74) gegen die Stufe vorzuspannen.

5. Angelrolle mit fester Spule nach Anspruch 3, oder 4,
**dadurch gekennzeichnet,**
**dass** die Buchse (46) zu dem Einfassungsteil (56) hin und von diesem weg verschiebbar ist, sodass die Betätigung der Verriegelung (46, 60, 72, 74, 76) durch die Bewegung der Buchse (46) zu dem Einfassungsteil (56) hin ausgeführt wird.

6. Angelrolle mit fester Spule nach einem der Ansprüche 3 bis 5,
**dadurch gekennzeichnet,**
**dass** mindestens ein Vorsprung (64) an der Buchse (46) vorgesehen ist und dass mindestens eine Aussparung (66) an dem Bügelarm (40) vorgesehen ist, um es dem Vorsprung (64) zu ermöglichen, in die Aussparung (66) einzuschnappen, um die Buchse (46) lösbar in der Verriegelungsstellung zu halten.

## Revendications

1. Moulinet de pêche à tambour fixe (10) ayant une poignée (18) couplée à un dispositif d'entraînement du bras d'anse du moulinet (10) de manière que la rotation de la poignée (18) fasse tourner le bras d'anse (40), et un galet guide-fil (32) pouvant tourner librement sur le bras d'anse (40) autour duquel s'étend la ligne de pêche (34) lorsqu'on utilise le moulinet (10), de telle sorte que, lorsque le bras d'anse (40) tourne autour du tambour (26), cette ligne (34) soit retirée des eaux de pêche pour passer autour du galet (32) et sur le tambour (26), **caractérisé en ce que** le bras d'anse (40) est muni d'un dispositif de blocage facilement déblocable (46, 60, 72, 74, 76) agencé pour empêcher la rotation du galet guide-fil (32).

2. Moulinet de pêche à tambour fixe selon la revendication 1, **caractérisé en ce que** le dispositif de blocage (46, 60, 72, 74, 76) comprend un tourillon mobile (72) et le galet guide-fil (32) est doté d'une partie formant jupe (56) dans laquelle est formé au moins un orifice ou évidement (60) dans lequel le tourillon (72) peut venir en prise de manière amovible.

3. Moulinet de pêche à tambour fixe selon la revendication 2, **caractérisé en ce que** le tourillon (72) est maintenu dans un manchon (46) dans lequel s'étend un ressort (76) qui vient pousser le tourillon (72) pour l'amener en prise avec ledit au moins un orifice ou évidement (60).

4. Moulinet de pêche à tambour fixe selon la revendication 3, **caractérisé en ce que** le manchon (46) comprend une paroi interne en gradins et le tourillon (72) est muni d'un épaulement (74) et le tourillon (72) dépasse d'une extrémité du manchon (46) avec le ressort (76) qui est un ressort de compression s'étendant dans l'autre extrémité du manchon (46) de manière à pousser l'épaulement (74) contre le gradin.

5. Moulinet de pêche à tambour fixe selon la revendication 3 ou la revendication 4, **caractérisé en ce que** le manchon (46) peut coulisser vers et depuis la jupe (56) de manière à faire fonctionner le dispositif de blocage (46, 60, 72, 74, 76) en déplaçant le manchon (46) vers la jupe (56).

6. Moulinet de pêche à tambour fixe selon l'une quelconque des revendications 3 à 5, **caractérisé en ce que** le manchon (46) comporte au moins une saillie (64) et **en ce que** le bras d'anse (40) comporte au moins un évidement (66) afin de permettre l'encliquetage de la saillie (64) dans l'évidement (66) pour maintenir de manière amovible le manchon (46) en position bloquée.
